# EUROPEAN PATENT APPLICATION

(11) **EP 4 794 241 A1**
(43) Date of publication of application: **19.08.2026**
(21) Application number: 25157875.3
(22) Date of filing: 14.02.2025
(51) Int. Cl.: H04L 5/00

(54) **SYSTEM IMPACT ENHANCEMENTS FOR CARRIER AGGREGATION**

(71) Applicant: Nokia Technologies Oy, 02610 Espoo (FI)
(72) Inventor: DALSGAARD, Lars, Oulu (FI); HEJSELBAEK, Johannes, Holstebro (DK); KAZEMI, Parham, Espoo (FI); RYSGAARD, Bent Henneberg, Aalborg (DK); NIELSEN, Kim, Storvorde (DK)
(74) Representative: Page White Farrer

(57) **Abstract**

An apparatus configured to: receive, from a network node, a configuration for carrier aggregation, wherein the configuration comprises, at least, an indication of at least one secondary cell; and configure reception from the at least one secondary cell based, at least partially, on: whether a first band comprising at least one component carrier of a serving cell, and a second band comprising at least one component carrier of the at least one secondary cell, are a same band, and whether use of the single receiver chain is estimated to negatively impact reception performance of the apparatus, wherein the apparatus is capable of receiving at least two non-adjacent component carriers using a single receiver chain.

## Description

### TECHNICAL FIELD

The example and non-limiting embodiments relate generally to carrier aggregation and, more particularly, to carrier aggregation for UE capable of receiving multiple, fragmented component carriers with a single receiver chain.

### BACKGROUND

It is known, in carrier aggregation, for a UE to use a separate receiver chain for each received component carrier.

### SUMMARY

The following summary is merely intended to be illustrative. The summary is not intended to limit the scope of the claims.

In accordance with one aspect, an apparatus comprising: at least one processor; and at least one memory storing instructions that, when executed by the at least one processor, cause the apparatus at least to: receive, from a network node, an indication of whether the apparatus is allowed to use a single receiver chain for receiving at least two non-adjacent component carriers in carrier aggregation; and configure reception from at least one secondary cell based, at least partially, on the received indication.

In accordance with one aspect, a method comprising: receiving, with a user equipment from a network node, an indication of whether the apparatus is allowed to use a single receiver chain for receiving at least two non-adjacent component carriers in carrier aggregation; and configuring reception from at least one secondary cell based, at least partially, on the received indication.

In accordance with one aspect, an apparatus comprising means for performing: receiving, from a network node, an indication of whether the apparatus is allowed to use a single receiver chain for receiving at least two non-adjacent component carriers in carrier aggregation; and configuring reception from at least one secondary cell based, at least partially, on the received indication.

In accordance with one aspect, a computer-readable medium comprising program instructions stored thereon for performing at least the following: causing receiving, with a user equipment from a network node, of an indication of whether the user equipment is allowed to use a single receiver chain for receiving at least two non-adjacent component carriers in carrier aggregation; and configuring reception from at least one secondary cell based, at least partially, on the received indication.

In accordance with one aspect, an apparatus comprising: at least one processor; and at least one memory storing instructions that, when executed by the at least one processor, cause the apparatus at least to: determine based, at least partially, on a first band comprising a serving cell configured for a user equipment and at least one second band comprising at least one secondary cell configured for the user equipment, whether to allow the user equipment to use a single receiver chain for receiving at least two non-adjacent component carriers in the carrier aggregation; and transmit, to the user equipment, an indication of whether the user equipment is allowed to use the single receiver chain for receiving the at least two non-adjacent component carriers in the carrier aggregation.

In accordance with one aspect, a method comprising: with a network node, determining based, at least partially, on a first band comprising a serving cell configured for a user equipment and at least one second band comprising at least one secondary cell configured for the user equipment, whether to allow the user equipment to use a single receiver chain for receiving at least two non-adjacent component carriers in the carrier aggregation; and transmitting, to the user equipment, an indication of whether the user equipment is allowed to use the single receiver chain for receiving the at least two non-adjacent component carriers in the carrier aggregation.

In accordance with one aspect, an apparatus comprising means for performing: determining based, at least partially, on a first band comprising a serving cell configured for a user equipment and at least one second band comprising at least one secondary cell configured for the user equipment, whether to allow the user equipment to use a single receiver chain for receiving at least two non-adjacent component carriers in the carrier aggregation; and transmitting, to the user equipment, an indication of whether the user equipment is allowed to use the single receiver chain for receiving the at least two non-adjacent component carriers in the carrier aggregation.

In accordance with one aspect, a computer-readable medium comprising program instructions stored thereon for performing at least the following: with a network node, determining based, at least partially, on a first band comprising a serving cell configured for a user equipment and at least one second band comprising at least one secondary cell configured for the user equipment, whether to allow the user equipment to use a single receiver chain for receiving at least two non-adjacent component carriers in the carrier aggregation; and causing transmitting, to the user equipment, of an indication of whether the user equipment is allowed to use the single receiver chain for receiving the at least two non-adjacent component carriers in the carrier aggregation.

In accordance with one aspect, an apparatus comprising: at least one processor; and at least one memory storing instructions that, when executed by the at least one processor, cause the apparatus at least to: receive, from a network node, a configuration for carrier aggregation, wherein the configuration comprises, at least, an indication of at least one secondary cell; and configure reception from the at least one secondary cell based, at least partially, on: whether a first band comprising at least one component carrier of a serving cell, and a second band comprising at least one component carrier of the at least one secondary cell, are a same band, and whether use of the single receiver chain is estimated to negatively impact reception performance of the apparatus, wherein the apparatus is capable of receiving at least two non-adjacent component carriers using a single receiver chain.

In accordance with one aspect, a method comprising: receiving, with a user equipment from a network node, a configuration for carrier aggregation, wherein the configuration comprises, at least, an indication of at least one secondary cell; and configuring reception from the at least one secondary cell based, at least partially, on: whether a first band comprising at least one component carrier of a serving cell, and a second band comprising at least one component carrier of the at least one secondary cell, are a same band, and whether use of the single receiver chain is estimated to negatively impact reception performance of the user equipment, wherein the user equipment is capable of receiving at least two non-adjacent component carriers using a single receiver chain.

In accordance with one aspect, an apparatus comprising means for performing: receiving, from a network node, a configuration for carrier aggregation, wherein the configuration comprises, at least, an indication of at least one secondary cell; and configuring reception from the at least one secondary cell based, at least partially, on: whether a first band comprising at least one component carrier of a serving cell, and a second band comprising at least one component carrier of the at least one secondary cell, are a same band, and whether use of the single receiver chain is estimated to negatively impact reception performance of the apparatus, wherein the apparatus is capable of receiving at least two non-adjacent component carriers using a single receiver chain.

In accordance with one aspect, a computer-readable medium comprising program instructions stored thereon for performing at least the following: causing receiving, with a user equipment from a network node, of a configuration for carrier aggregation, wherein the configuration comprises, at least, an indication of at least one secondary cell; and configuring reception from the at least one secondary cell based, at least partially, on: whether a first band comprising at least one component carrier of a serving cell, and a second band comprising at least one component carrier of the at least one secondary cell, are a same band, and whether use of the single receiver chain is estimated to negatively impact reception performance of the user equipment, wherein the user equipment is capable of receiving at least two non-adjacent component carriers using a single receiver chain.

According to some aspects, there is provided the subject matter of the independent claims. Some further aspects are defined in the dependent claims.

### BRIEF DESCRIPTION OF THE DRAWINGS

The foregoing aspects and other features are explained in the following description, taken in connection with the accompanying drawings, wherein:
FIG. 1 is a block diagram of one possible and non-limiting example system in which the example embodiments may be practiced;
FIG. 2A and 2B are diagrams illustrating features as described herein;
FIG. 3, comprising FIGs. 3A and 3B, is a flowchart illustrating steps as described herein;
FIG. 4, comprising FIGs. 4A and 4B, is a flowchart illustrating steps as described herein;
FIG. 5 is a flowchart illustrating steps as described herein;
FIG. 6 is a flowchart illustrating steps as described herein; and
FIG. 7 is a flowchart illustrating steps as described herein.

### DETAILED DESCRIPTION OF EMBODIMENTS

The following abbreviations that may be found in the specification and/or the drawing figures are defined as follows:
- 3GPP: third generation partnership project
- 5G: fifth generation
- 5GC: 5G core network
- AMF: access and mobility management function
- CA: carrier aggregation
- CC: component carrier
- cRAN: cloud radio access network
- CU: central unit
- DL: downlink
- DU: distributed unit
- eNB (or eNodeB): evolved Node B (e.g., an LTE base station)
- EN-DC: E-UTRA-NR dual connectivity
- en-gNB or En-gNB: node providing NR user plane and control plane protocol terminations towards the UE, and acting as secondary node in EN-DC
- E-UTRA: evolved universal terrestrial radio access, i.e., the LTE radio access technology
- gNB (or gNodeB): base station for 5G/NF, i.e., a node providing NR user plane and control plane protocol terminations towards the UE, and connected via the NG interface to the 5GC
- I/F: interface
- L1: layer 1
- LTE: long term evolution
- MAC: medium access control
- MME: mobility management entity
- ng or NG: new generation
- ng-eNB or NG-eNB: new generation eNB
- NR: new radio
- N/W or NW: network
- O-RAN: open radio access network
- PCell: primary cell
- PDCP: packet data convergence protocol
- PHY: physical layer
- RAN: radio access network
- RF: radio frequency
- RLC: radio link control
- RRC: radio resource control
- RRH: remote radio head
- RS: reference signal
- RU: radio unit
- Rx: receiver/reception
- SCell: secondary cell
- SDAP: service data adaptation protocol
- SGW: serving gateway
- SI: study item
- SMF: session management function
- Tx: transmitter
- UE: user equipment (e.g., a wireless, typically mobile device)
- UPF: user plane function
- VNR: virtualized network function

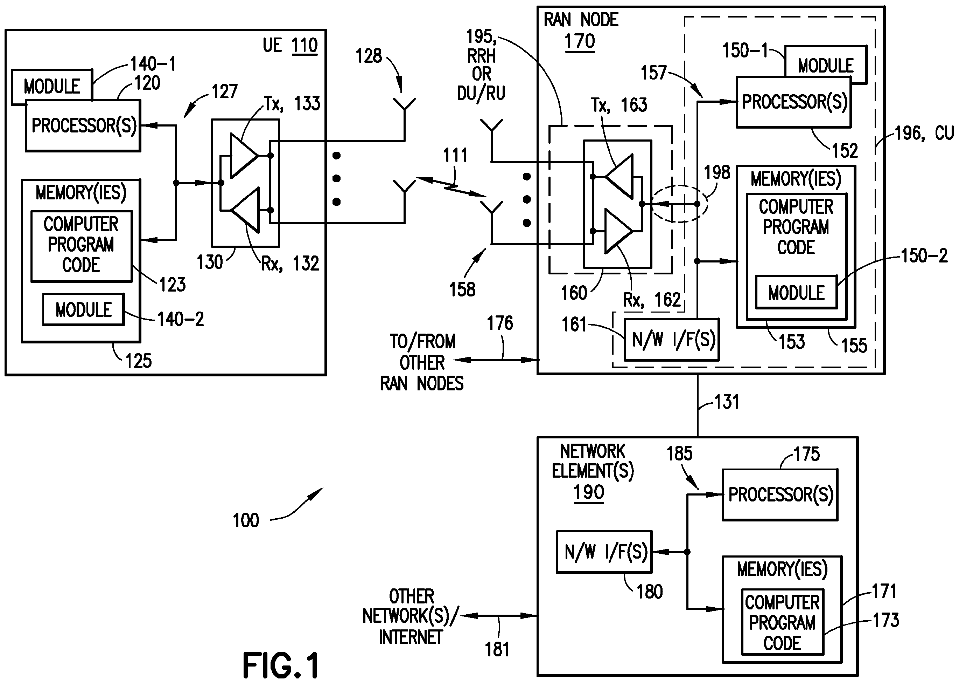

Turning to FIG. 1, this figure shows a block diagram of one possible and non-limiting example in which the examples may be practiced. A user equipment (UE) 110, radio access network (RAN) node 170, and network element(s) 190 are illustrated. In the example of FIG. 1, the user equipment (UE) 110 is in wireless communication with a wireless network 100. A UE is a wireless device that can access the wireless network 100. The UE 110 includes one or more processors 120, one or more memories 125, and one or more transceivers 130 interconnected through one or more buses 127. Each of the one or more transceivers 130 includes one or more receivers, Rx, 132 and one or more transmitters, Tx, 133. The one or more buses 127 may be address, data, or control buses, and may include any interconnection mechanism, such as a series of lines on a motherboard or integrated circuit, fiber optics or other optical communication equipment, and the like. A "circuit" may include dedicated hardware or hardware in association with software executable thereon. The one or more transceivers 130 are connected to one or more antennas 128. The one or more memories 125 include computer readable code 123. The UE 110 includes a module 140, comprising one of or both parts 140-1 and/or 140-2, which may be implemented in a number of ways. The module 140 may be implemented in hardware as module 140-1, such as being implemented as part of the one or more processors 120. The module 140-1 may be implemented also as an integrated circuit or through other hardware such as a programmable gate array. In another example, the module 140 may be implemented as module 140-2, which is implemented as computer readable code 123 and is executed by the one or more processors 120. For instance, the one or more memories 125 and the computer readable code 123 may be configured to, with the one or more processors 120, cause the user equipment 110 to perform one or more of the operations as described herein. The UE 110 communicates with RAN node 170 via a wireless link 111.

The RAN node 170 in this example is a base station that provides access by wireless devices such as the UE 110 to the wireless network 100. The RAN node 170 may be, for example, a base station for 5G, also called New Radio (NR). In 5G, the RAN node 170 may be a NG-RAN node, which is defined as either a gNB or a ng-eNB. A gNB is a node providing NR user plane and control plane protocol terminations towards the UE, and connected via the NG interface to a 5GC (such as, for example, the network element(s) 190). The ng-eNB is a node providing E-UTRA user plane and control plane protocol terminations towards the UE, and connected via the NG interface to the 5GC. The NG-RAN node may include multiple gNBs, which may also include a central unit (CU) (gNB-CU) 196 and distributed unit(s) (DUs) (gNB-DUs), of which DU 195 is shown. Note that the DU may include or be coupled to and control a radio unit (RU). The gNB-CU is a logical node hosting RRC, SDAP and PDCP protocols of the gNB or RRC and PDCP protocols of the en-gNB that controls the operation of one or more gNB-DUs. The gNB-CU terminates the F1 interface connected with the gNB-DU. The F1 interface is illustrated as reference 198, although reference 198 also illustrates a link between remote elements of the RAN node 170 and centralized elements of the RAN node 170, such as between the gNB-CU 196 and the gNB-DU 195. The gNB-DU is a logical node hosting RLC, MAC and PHY layers of the gNB or en-gNB, and its operation is partly controlled by gNB-CU. One gNB-CU supports one or multiple cells. One cell is supported by only one gNB-DU. The gNB-DU terminates the F1 interface 198 connected with the gNB-CU. Note that the DU 195 is considered to include the transceiver 160, e.g., as part of a RU, but some examples of this may have the transceiver 160 as part of a separate RU, e.g., under control of and connected to the DU 195. The RAN node 170 may also be an eNB (evolved NodeB) base station, for LTE (long term evolution), or any other suitable base station, access point, access node, or node.

The RAN node 170 includes one or more processors 152, one or more memories 155, one or more network interfaces (N/W I/F(s)) 161, and one or more transceivers 160 interconnected through one or more buses 157. Each of the one or more transceivers 160 includes a receiver, Rx, 162 and a transmitter, Tx, 163. The one or more transceivers 160 are connected to one or more antennas 158. The one or more memories 155 include computer readable code 153. The CU 196 may include the processor(s) 152, memories 155, and network interfaces 161. Note that the DU 195 may also contain its own memory/memories and processor(s), and/or other hardware, but these are not shown.

The RAN node 170 includes a module 150, comprising one of or both parts 150-1 and/or 150-2, which may be implemented in a number of ways. The module 150 may be implemented in hardware as module 150-1, such as being implemented as part of the one or more processors 152. The module 150-1 may be implemented also as an integrated circuit or through other hardware such as a programmable gate array. In another example, the module 150 may be implemented as module 150-2, which is implemented as computer readable code 153 and is executed by the one or more processors 152. For instance, the one or more memories 155 and the computer readable code 153 are configured to, with the one or more processors 152, cause the RAN node 170 to perform one or more of the operations as described herein. Note that the functionality of the module 150 may be distributed, such as being distributed between the DU 195 and the CU 196, or be implemented solely in the DU 195.

The one or more network interfaces 161 communicate over a network such as via the links 176 and 131. Two or more gNBs 170 may communicate using, e.g., link 176. The link 176 may be wired or wireless or both and may implement, for example, an Xn interface for 5G, an X2 interface for LTE, or other suitable interface for other standards.

The one or more buses 157 may be address, data, or control buses, and may include any interconnection mechanism, such as a series of lines on a motherboard or integrated circuit, fiber optics or other optical communication equipment, wireless channels, and the like. For example, the one or more transceivers 160 may be implemented as a remote radio head (RRH) 195 for LTE or a distributed unit (DU) 195 for gNB implementation for 5G, with the other elements of the RAN node 170 possibly being physically in a different location from the RRH/DU, and the one or more buses 157 could be implemented in part as, for example, fiber optic cable or other suitable network connection to connect the other elements (e.g., a central unit (CU), gNB-CU) of the RAN node 170 to the RRH/DU 195. Reference 198 also indicates those suitable network link(s).

It is noted that description herein indicates that "cells" perform functions, but it should be clear that equipment which forms the cell will perform the functions. The cell makes up part of a base station. That is, there can be multiple cells per base station. For example, there could be three cells for a single carrier frequency and associated bandwidth, each cell covering one-third of a 360 degree area so that the single base station's coverage area covers an approximate oval or circle. Furthermore, each cell can correspond to a single carrier and a base station may use multiple carriers. So if there are three 120 degree cells per carrier and two carriers, then the base station has a total of 6 cells.

The wireless network 100 may include a network element or elements 190 that may include core network functionality, and which provides connectivity via a link or links 181 with a further network, such as a telephone network and/or a data communications network (e.g., the Internet). Such core network functionality for 5G may include access and mobility management function(s) (AMF(s)) and/or user plane functions (UPF(s)) and/or session management function(s) (SMF(s)). Such core network functionality for LTE may include MME (Mobility Management Entity)/SGW (Serving Gateway) functionality. These are merely illustrative functions that may be supported by the network element(s) 190, and note that both 5G and LTE functions might be supported. The RAN node 170 is coupled via a link 131 to a network element 190. The link 131 may be implemented as, e.g., an NG interface for 5G, or an S1 interface for LTE, or other suitable interface for other standards. The network element 190 includes one or more processors 175, one or more memories 171, and one or more network interfaces (N/W I/F(s)) 180, interconnected through one or more buses 185. The one or more memories 171 include computer readable code 173. The one or more memories 171 and the computer readable code 173 are configured to, with the one or more processors 175, cause the network element 190 to perform one or more operations.

The wireless network 100 may implement network virtualization, which is the process of combining hardware and software network resources and network functionality into a single, software-based administrative entity, a virtual network. Network virtualization involves platform virtualization, often combined with resource virtualization. Network virtualization is categorized as either external, combining many networks, or parts of networks, into a virtual unit, or internal, providing network-like functionality to software containers on a single system. For example, a network may be deployed in a tele cloud, with virtualized network functions (VNF) running on, for example, data center servers. For example, network core functions and/or radio access network(s) (e.g. CloudRAN, O-RAN, edge cloud) may be virtualized. Note that the virtualized entities that result from the network virtualization are still implemented, at some level, using hardware such as processors 152 or 175 and memories 155 and 171, and also such virtualized entities create technical effects.

It may also be noted that operations of example embodiments of the present disclosure may be carried out by a plurality of cooperating devices (e.g. cRAN).

The computer readable memories 125, 155, and 171 may be of any type suitable to the local technical environment and may be implemented using any suitable data storage technology, such as semiconductor based memory devices, flash memory, magnetic memory devices and systems, optical memory devices and systems, fixed memory and removable memory. The computer readable memories 125, 155, and 171 may be means for performing storage functions. The processors 120, 152, and 175 may be of any type suitable to the local technical environment, and may include one or more of general purpose computers, special purpose computers, microprocessors, digital signal processors (DSPs) and processors based on a multicore processor architecture, as non-limiting examples. The processors 120, 152, and 175 may be means for performing functions, such as controlling the UE 110, RAN node 170, and other functions as described herein.

In general, the various example embodiments of the user equipment 110 can include, but are not limited to, cellular telephones such as smart phones, tablets, personal digital assistants (PDAs) having wireless communication capabilities, portable computers having wireless communication capabilities, image capture devices such as digital cameras having wireless communication capabilities, gaming devices having wireless communication capabilities, music storage and playback appliances having wireless communication capabilities, Internet appliances permitting wireless Internet access and browsing, tablets with wireless communication capabilities, as well as portable units or terminals that incorporate combinations of such functions.

Having thus introduced one suitable but non-limiting technical context for the practice of the example embodiments of the present disclosure, example embodiments will now be described with greater specificity.

Features as described herein may generally relate to fragmented carriers. Fragmented carriers may be, for example, intra-band non-contiguous component carriers (e.g. component carriers separated by a gap) that are used together to provide carrier aggregation (CA). Optionally, fragmented carriers may be non-adjacent component carriers (CC) that do not connect at the borders of the CC. For example, the borders of the CC may be separated from each other by, for example, a gap, or the CC may overlap such that the borders of the CC do not align. Optionally, fragmented carriers may be intra-band carriers that are in close proximity to each other (i.e. their borders are near each other).

In carrier aggregation, the UE may be configured with one or more secondary/serving cells (SCells) in addition to the primary cell (PCell). Both a PCell and an SCell may be considered serving cells. The SCell may be a downlink only cell, and it may not be used to carry PUCCH signaling. The PCell may be a serving cell that provides a UE with configurations, for example a RRC configuration, a PCell configuration, and/or a PSCell configuration.

In the present disclosure, the term "serving cell" may refer to PCell, a SCell, a PSCell, or any cell that provides connection or coverage between a UE and at least part of a network.

A new study item (SI) proposal was submitted by a group of operators in RP-233374 at 3GPP RAN#102 to evaluate the feasibility of using a single receiver (Rx) chain on fragmented intra-band blocks in downlink (DL) CA, while studying the near-far problem and unwanted emissions implications. The proposal is a part of the Rel-19 RAN4 work-item package discussion as captured in RP-240019. The SI was submitted for approval in RAN#104 in RP-241360 and is now called FS_NR_FR1_Frag_Carrier. The suggested scope in the RAN#104 study item on R19 Fragmented Carriers is as follows:
"...The objective of this study is as follows:
- Identify methods for reducing the number of UE Rx chains (e.g. 1 or 2) needed for single DL band with frequency span ≤ 100 MHz, containing two non-contiguous CCs within a CA combination for the inter-operator co-located scenario, considering:
- Which RF requirements could be adjusted for the inter-operator co-located BS scenario, e.g. existing UE RF requirements such as ACS [RAN4];
- The ability to semi-statically switch hardware resources (i.e. Rx chains) between bands [RAN4, RAN2 - See note 2];
- Up to 6 dB DL power spectral density imbalance between the two non-contiguous CCs [RAN4];
- Impacts on DL performance [RAN4];
- Means for a UE to inform the network of new CA configuration it can support with adjusted RF requirements [RAN4, RAN2 - See note 2].
   NOTE 1: No RAN1 impact is foreseen
   NOTE 2: RAN2 work, if necessary, will be triggered by RAN4 LS
   NOTE 3: When the study is complete, consider normative work to define core requirements using the identified solution..."

Example embodiments of the present disclosure may or may not relate to a UE with a hardware configuration that enables reception of, for example, multiple fragmented intra-band blocks with a single RX chain.

In the present disclosure, the terms "single receiver", "single RX chain", "single receiver chain", and "common receiver" may be used interchangeably.

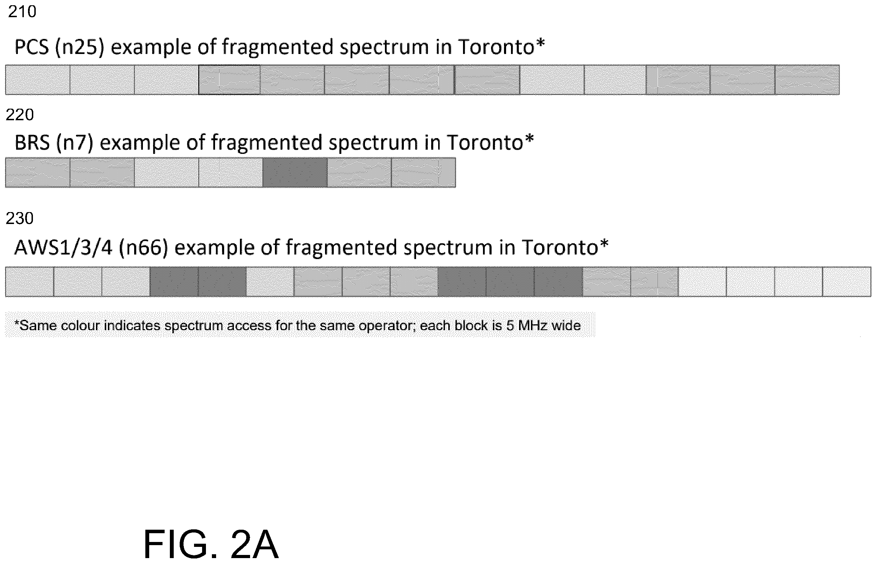

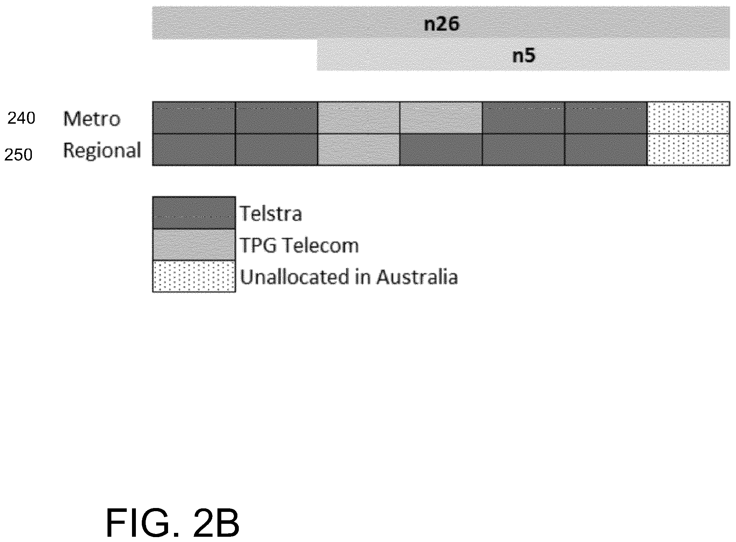

Referring now to FIGs. 2A and 2B, illustrated are examples of fragmented carriers. FIG. 2A illustrates the examples of n25, n66 and n7 in Canada, where different colors indicate different operator frequency spectrum ownership. In the example of n25 (210), blocks of spectrum (e.g. 5MHz wide) are illustrated that are accessible to two different operators. In the example of n7 (220), blocks of spectrum are illustrated that are accessible to three different operators. In the example of n66 (230), blocks of spectrum are illustrated that are accessible to four different operators. FIG. 2B illustrates the examples of n26/n5 in Australia, where different colors indicate different operator spectrum ownership. Both n26 and n5 are split into operator frequency blocks belonging to different operators, as well as unallocated blocks, in the metro (240) and regional (250) areas.

As illustrated in the examples of FIGs. 2A and 2B, the in-gap interferer can be several channels and even from more than one other operator. When an operator uses channels of adjacent allocation to another operator, they may be regarded as sources causing interference in the gap between channels licensed by another operator. More than one block, in a gap between blocks of an operator, may cause interference to the operator, and those in-gap blocks may correspond to multiple other operators. Some information of the channel usage may be provided by inter-operator communication/coordination. However, this information is provided on a general level, and does not provide any explicit information on the instantaneous use and power levels.

When defining UE requirements for a UE configured with carrier aggregation, it is currently assumed that the UE uses a separate receiver for each component carrier (CC). This then puts a limit on the amount of CC the UE can support, for example based on the number of receiver chains the UE comprises. As mentioned, the SI RP-240019 is directed to defining requirements for a UE which may use different assumptions when receiving more than 1 CC within a band, while there may be presence of an unknown interferer between the CCs (e.g. in a fragmented carrier configuration).

When discussing fragmented carrier aggregation (CA), one would have to account for the existing UE CA requirements when looking into what UE CA requirements may have to be defined explicitly for CA under the assumption of fragmented CA.

Currently, it is assumed that when the UE is configured with CA, the UE uses separate receiver for each carrier, at least when the carriers are not contiguous intra-band CC. The UE requirements have been developed based on such assumption, including UE reference sensitivity (REFSENS) requirements. REFSENS relates to the reference sensitivity of a UE for decoding a received message. For example, it may indicate a minimum signal strength required for the UE to decode a received message. REFSENS may be a ratio with respect to a block error rate across a defined period of time or samples. REFSENS may indicate an amount of noise that can be received by the UE simultaneously with a received message while the received message is still able to be decoded. REFSENS may be dependent on bandwidth received by the UE. A UE will have a sensitivity at the REFSENS level or below the REFSENS level to pass conformance test requirements of the apparatus.

However, the existing UE requirement assuming separate receivers for each CC does not forbid the UE to use a single receiver for both CCs, as long as the UE still fulfills the requirements defined for using separate receiver per CC (e.g. received messages can be decoded with an error rate below a threshold). Accordingly, the UE is already allowed to use separate receivers or a single receiver for CA. This can be done by the UE without informing such change to the network; changing between using single or separate receiver(s) for receiving the CCs is agnostic to the network. However, this is allowed only if, and because, the UE requirements are not changing or allowed to change, and so the requirements applicable when using a separate receiver for each CC also apply when using a single receiver for both CCs.

For the fragmented carrier discussion, the situation is different, and changes the above approach. The reason for this is that, during the study of how to define fragmented carriers, it has been raised that there is a need for relaxing the UE RF requirements for the receiver in the specifications when applying a single receiver for receiving the fragmented CCs.

Additionally, it is assumed that the UE will indicate to the network that the UE is capable of supporting fragmented carrier CA in certain UE-supported band combinations. Hence, currently the assumption is that the UE indicates this support, and if the network configures this band combination, the UE is allowed to apply a single receiver for the CCs.

In the present disclosure, bands may comprise time-frequency bands.

One drawback with applying the fragmented carrier approach is that using a single receiver for receiving the CCs is a relaxation in the UE REFSENS requirement, such that UE REFSENS degradation is expected. Such degradation has a negative impact on the overall system performance. However, there may be situations where the network would like to avoid such degradation.

In an example embodiment, the network may indicate, to a UE supporting the 'fragmented carrier' capability and configured with band combinations where the UE supports 'fragmented carrier' usage, whether or not the network allows the UE to use a single receiver when receiving the CCs in the band combination.

In an example embodiment, the indication may only apply if/when using the single receiver does not decrease the UE performance (e.g. REFSENS).

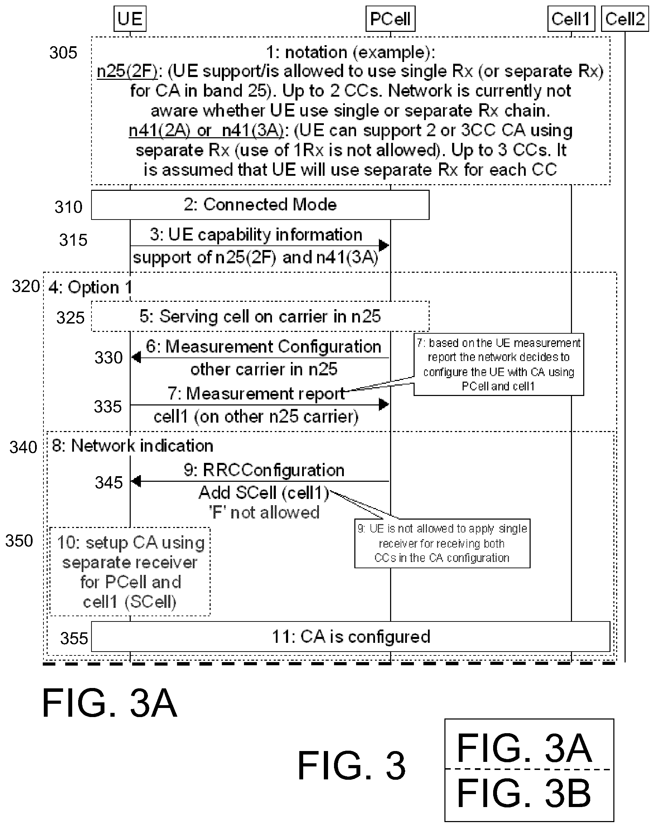

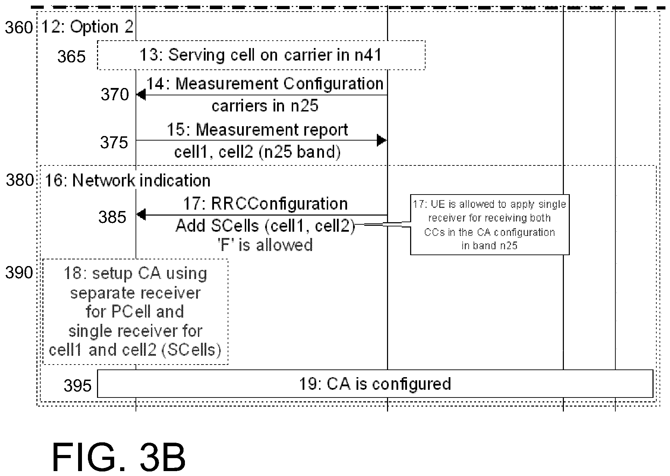

Referring now to FIG. 3, comprising a combination of FIGs. 3A and 3B, illustrated is a flow chart illustrating an example of signaling between a UE and a network regarding the use of a single Rx chain for more than one CC. The network may comprise a PCell and one or more PSCells or SCells. The PCells, PSCells, and/or SCells may be provided with a network, a network node, a base station, a gNB, etc. A person of ordinary skill in the art will understand that one, some, or all of these steps may occur in a different order or simultaneously; that some steps may be omitted; that some steps may be added; and/or that some steps may be substituted for different steps having a similar effect. Other deployment examples may be possible.

At 305, shown is the detailed setup that may be used in the example of FIG. 3. For example, the UE may support/be allowed to use a single Rx (or separate Rx) for CA in band n25 (2F). The UE may receive up to 2 CCs per single RX. The network may not currently be aware of whether the UE uses single or separate Rx chains. In addition, the UE may support, for n41 (2A) or n41 (3A), 2 or 3 CC CA using separate Rx, and use of 1 Rx may not be allowed. The UE may receive up to 3 CCs per single Rx. It may be assumed that the UE will use separate Rx for each CC. At 310, the UE may be in a connected mode. At 315, the UE may indicate, to the network, that the UE is capable of and supports 'Fragmented Carrier' configuration, i.e. the UE is capable of receiving more than 1 CC in band 25 using only 1 receiver (but may also support receiving more than 1 CC using more than 1 receiver). Additionally, in this example, the UE may support up to 3CCs in band 41 using separate receivers band CC.

In a first option (320), at 325, the UE may have a serving cell (for example PCell) on a carrier in band n25, and the SCell may be added on the same band. At 330, the network may configure the UE with a measurement configuration, indicating to the UE to measure other carriers in band n25. Based on the configuration, the UE may initiate measurements. At 335, the UE may transmit a measurement report to the network including results from cell1, which in this example is a cell on another carrier in band n25. Based on the measurement report, the network may decide to configure the UE with CA using the current serving PCell, and cell1 as SCell.

In an example embodiment, a network indication may be provided to indicate to the UE whether it is allowed to use or apply a single receiver for receiving both CCs in a CA configuration. An example is illustrated at 340. At 345, the NW may configure the UE with CA using cell1 as SCell. Cell1 may be added as the SCell. It may be noted that a SCell configuration may be provided by a PCell or a PSCell. Additionally, the network may indicate, for example in the SCell configuration, that the UE is not allowed to apply a single receiver for reception of the PCell and SCell (i.e. the cells within band n25). It may be noted that a PCell or a PSCell may configure the UE in CA.

In an example embodiment, the NW may determine to not allow the UE to apply a single RX for multiple CC because the PCell and the SCell configured for the UE are in a same band. Additionally or alternatively, the NW decision may be based, at least partially, on the UE capability information, the measurement report, a number of Rx chains the UE comprises, feedback received from the UE, a frequency bandwidth of the CCs, etc.

In an example embodiment, such network indication may be conditional; for example, an indication that use of the single RX for receiving multiple CC is 'not allowed' may only apply, or be applied by the UE, if applying a single receiver has a negative impact on the UE reception performance (e.g. REFSENS). If the UE receives a network indication that the single Rx is not allowed and determines that applying the single receiver would not have a negative impact on UE performance (e.g. no impact on REFSENS), then the UE may determine to use the single receiver for receiving multiple CC even though the network indicated that such behavior is not allowed. However, if the UE receives a network indication that the single Rx is not allowed and determines that applying the single receiver would negatively impact UE performance (e.g. REFSENS), the UE may use a separate Rx for each CC. The network indication may be conditional based on a configuration of the UE; the UE may be configured to consider the network indication conditional or required/unconditional.

In another example embodiment, the network indication may be unconditional, such that the EU must configure CA according to the network indication.

At 350, the UE may add the SCell using separate receivers for the PCell and SCell. This may be based, at least partially, on the network indication indicating that single Rx is not allowed. At 355, CA may be configured.

In a second option (360), the PCell and SCell may be in different bands, where both SCells may be in the same band (e.g. band n25)). At 365, the serving cell (PCell) may be on a carrier in band n41. At 370, the network may configure the UE with a measurement configuration indicating, to the UE, to measure other carriers in band n25. Based on the configuration, the UE may initiate measurements. At 375, the UE may transmit a measurement report to the network including results from cell1, which may be a cell on a carrier in band n25. Based on the measurement report, the network may decide to configure the UE with CA using current serving PCell, and cell1 as SCell. In the same measurement report, or another measurement report, the UE may report measurement results from another cell on another carrier in band n25 (cell2).

In the example illustrated at 380, the NW indication may indicate that the UE is allowed to use a single Rx to receive multiple CC. At 385, the network may configure the UE with CA using cell1 and cell2 as SCells. Cell1 and Cell2 may be added as SCells. Additionally, the network may indicate, for example in the SCell configuration, that the UE is allowed to apply a single receiver for reception of the SCell1 and SCell2 (e.g. cell1 and cell2 within band n25).

In an example embodiment, the NW may determine to allow use of a single receiver for reception for CC of two SCells based, at least partially, on the two SCells being on a different band than the PCell. Additionally or alternatively, the NW decision may be based, at least partially, on the UE capability information, the measurement report, a number of Rx chains the UE comprises, feedback received from the UE, a width of the CCs, etc.

In an example embodiment, the NW indication may conditional; for example, an indication that the single receiver is 'allowed' may only apply if applying the single receiver has no negative impact on the UE reception performance (e.g. REFSENS) in band n25.

In another example embodiment, the NW indication may be unconditional (e.g. the UE may apply the NW indication regardless of whether the application of a single receiver would negatively impact UE reception performance with respect to, for example, REFSENS).

At 390, the UE may add the SCells using single receivers for SCells (cell1 and cell2). However, for the PCell, the UE may use a separate receiver (i.e. a receiver that only receives a single CC).

At 395, CA may be configured.

While FIG. 3 illustrates the NW indicating whether the UE is allowed to use a single receiver for multiple CC reception via an RRCReconfiguration message (345, 385), the indication is not limited to RRC signaling. Optionally, the NW indication may be separately indicated to the UE using other message formats, or may be transmitted as part of the configuration of the PCell, etc. In an example embodiment, the NW indication that the UE is allowed or not allowed to use a single receiver for multiple CC reception may be transmitted via MAC CE or DCI signaling.

A technical effect of example embodiments of the present disclosure related to a network indication of whether a single receiver is allowed to be applied by the UE may be to give flexibility to the network to decide whether the UE is allowed to use single receiver chain reception for CA or not. If the network knows (e.g. based on UE capability information) that the UE has spare receiver chains and wants to ensure UE performance (e.g. REFSENS) is not reduced due to use of a single receiver, the network may indicate to the UE that it is not allowed to apply a single receiver for reception of some configured CCs. As mentioned, the NW indication not applying single receiver may be conditioned such that, if the UE applies a single receiver, such single receiver may not degrade the UE reception performance (e.g. REFSENS) compared to using separate receivers.

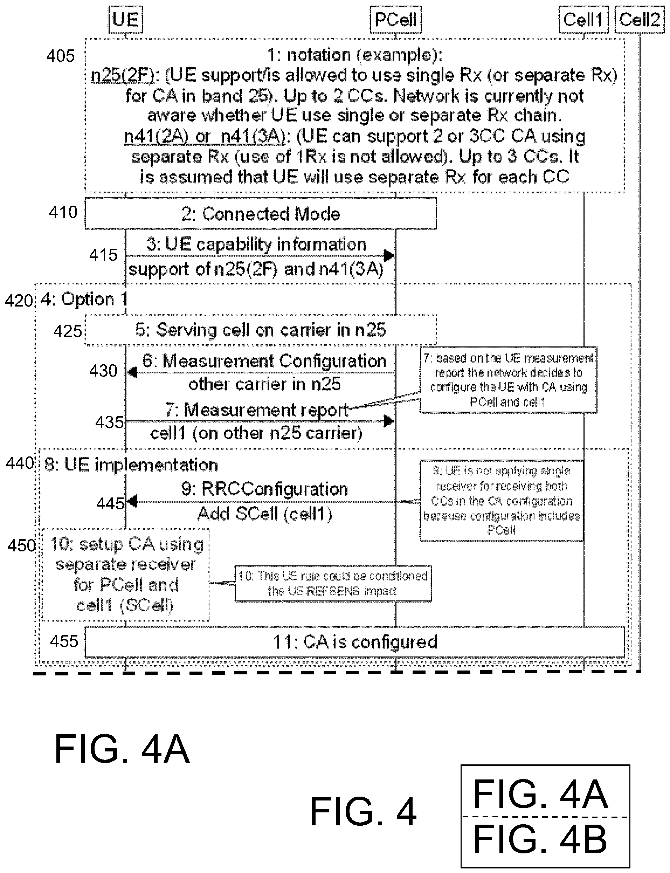

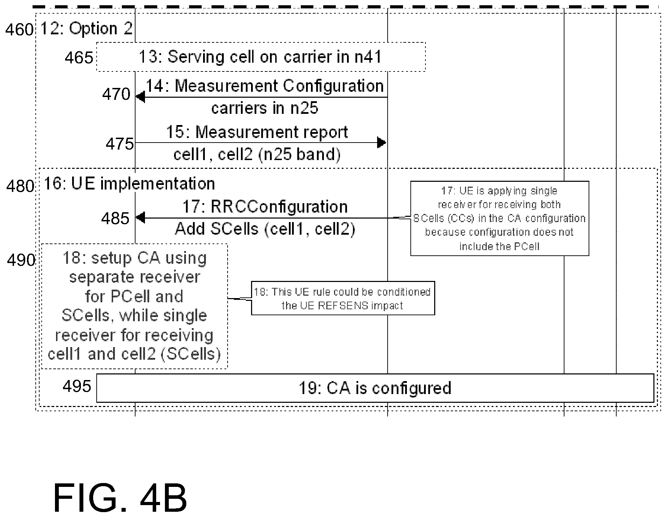

Referring now to FIG. 4, comprising a combination of FIGs. 4A and 4B, illustrated is a flow chart illustrating an example of signaling between a UE and a network regarding the use of a single Rx chain for more than one CC. A person of ordinary skill in the art will understand that one, some, or all of these steps may occur in a different order or simultaneously; that some steps may be omitted; that some steps may be added; and/or that some steps may be substituted for different steps having a similar effect. Other deployment examples may be possible.

At 405, shown is the detailed setup that may be used in the example of FIG. 4. For example, the UE may support/be allowed to use a single Rx (or separate Rx) for CA in band n25 (2F). The UE may receive up to 2 CCs per single RX. The network may not currently be aware of whether the UE uses single or separate Rx chains. In addition, the UE may support, for n41 (2A) or n41 (3A), 2 or 3 CC CA using separate Rx, and use of 1 Rx may not be allowed. The UE may receive up to 3 CCs per single Rx. It may be assumed that the UE will use separate Rx for each CC. At 410, the UE may be in a connected mode. At 415, the UE may indicate, to the network, that the UE is capable of and supports 'Fragmented Carrier' configuration, i.e. the UE is capable of receiving more than 1 CC in band 25 using only 1 receiver (but may also support receiving more than 1 CC using more than 1 receiver). Additionally, in this example, the UE may support up to 3CCs in band 41 using separate receivers band CC.

In a first option (420), both PCell and SCell may be in a same band (e.g. band n25). At 425, the UE may have a serving cell (for example PCell) on a carrier in band n25. At 430, the network may configure the UE with a measurement configuration indicating, to the UE, to measure other carriers in band n25. Based on the configuration, the UE may initiate measurements. At 435, the UE may transmit a measurement report to the network including results from cell1, which may be a cell on another carrier in band n25. Based on the measurement report, the network may decide to configure the UE with CA using current serving PCell and cell1 as SCell.

In an example embodiment, the UE may determine whether to apply single RX reception for multiple CC, for example as at 440. At 445, the network may configure the UE with an SCell (e.g. adds the SCell) using cell1 as the SCell. As the added SCell is in band n25, and the PCell is also in band n25, the UE may not use single receiver for operating/receiving both CC. In an alternative example embodiment, such implementation may be conditional, such that the UE may only determine to not use a single receiver for receiving both CC if applying a single receiver has, or is predicted to have, a negative impact on the UE reception performance (e.g. REFSENS).

In an example embodiment, the UE may also determine whether to use a single receiver for multiple CC reception based on the capability of the UE, the expected future needs of the UE of Rx chains, measurements of the channel, etc.

At 450, the UE may add the SCell using separate receivers for the PCell and SCell. In another example, if the UE concludes that PCell and SCell may be received using single receiver, the UE may apply a single receiver (e.g. if the UE usage of a single receiver is conditional, and the single receiver is not expected to have negative impact on UE reception performance such as REFSENS).

At 455, CA may be configured.

In a second option (460), PCell and SCell may be in different bands, and both SCells may be in the same band (e.g. band n25). At 465, the serving cell (PCell) may be on a carrier in band n41. At 470, the network may configure the UE with a measurement configuration indicating to the UE to measure other carriers in band n25. Based on the configuration, the UE may initiate measurements. At 475, the UE may transmit a measurement report to the network including results from cell1, which may be a cell on a carrier in band n25. Based on the measurement report, the network may decide to configure the UE with CA using the current serving PCell, and cell1 as SCell. In the same measurement report or another measurement report, the UE may report measurement results from another cell on another carrier in band n25 (cell2).

In an example the UE may determine whether to apply single RX reception for multiple CC, for example as at 480. At 485, the network may configure the UE with CA using cell1 and cell1 as SCells. Cell1 and cell2 may be added as SCells. As the added SCells are in a different band (band n25) than the PCell (band n41), the UE may use a single receiver for operating/receiving both CC in band n25 (SCells). In an alternative example embodiment, such implementation may be conditional, such that use of a single receiver for multiple CC reception may only be applied if applying the single receiver does not have a negative impact on the UE reception performance (e.g. REFSENS).

At 490, the UE may add the SCells using separate receivers for the PCell and SCells. For the SCells (in band n25), the UE may use a single receiver chain. In an alternative example, if the UE concludes/determines that the SCells cannot be received using a single receiver, the UE may apply separate receivers for reception of each of the SCells (scell1 and scell2). For example, the UE may determine that the SCells cannot be received using a single receiver based on a measurement or level of in-gap interference.

In an example embodiment, the UE may also determine whether to use a single receiver for multiple CC reception based on the capability of the UE, the expected future needs of the UE for its Rx chains, measurements of the channel, etc.

At 495, CA may be configured.

A technical effect of example embodiments of the present disclosure related to UE determination of whether to apply a separate receiver for multiple CC reception may be to support granting the UE more responsibility while the UE is mandated to follow the supporting aspects in the process of SCell configuration.

Optionally, syntax for specifying the fragmented additional band combinations may be used by the UE and/or the network (e.g. 2F, 2A, 3A in FIGs. 3 and 4). Example embodiments of the present disclosure may be applicable whether or not such syntax is used.

Optionally, example embodiments of the present disclosure may be used where the UE is in complete control of the actual used radio frequency (RF) configuration, meaning if either the specification does not specify explicitly how to configure the use of fragmented carriers, or if the UE is on the boundary of maximum RF CA combination capabilities, the UE may see an advantage to start saving resources by applying a fragmented carrier configuration.

Example embodiments may be used in the context of 5G, but are not limited to such network technology; example embodiments of the present disclosure may also be applicable in the context of other existing or future technology.

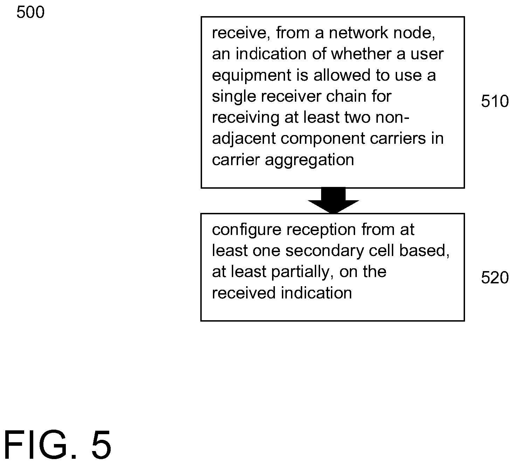

FIG. 5 illustrates the potential steps of an example method 500. The example method 500 may include: receiving, from a network node, an indication of whether a user equipment is allowed to use a single receiver chain for receiving at least two non-adjacent component carriers in carrier aggregation, 510; and configuring reception from at least one secondary cell based, at least partially, on the received indication, 520. The example method 500 may be performed, for example, with a UE.

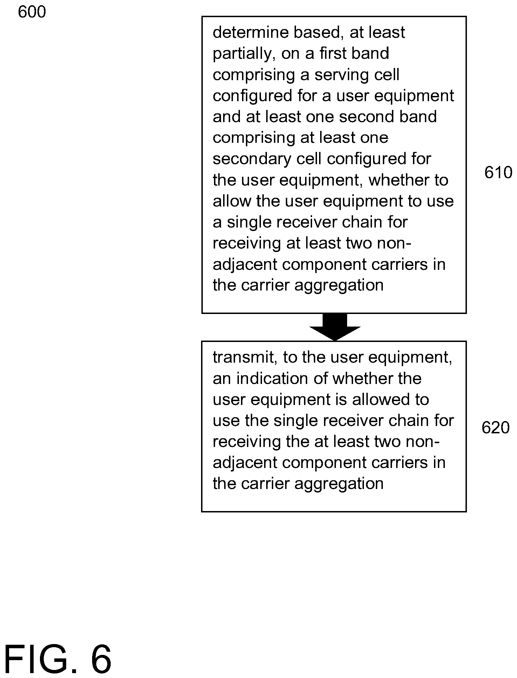

FIG. 6 illustrates the potential steps of an example method 600. The example method 600 may include: determining based, at least partially, on a first band comprising a serving cell configured for a user equipment and at least one second band comprising at least one secondary cell configured for the user equipment, whether to allow the user equipment to use a single receiver chain for receiving at least two non-adjacent component carriers in the carrier aggregation, 610; and transmitting, to the user equipment, an indication of whether the user equipment is allowed to use the single receiver chain for receiving the at least two non-adjacent component carriers in the carrier aggregation, 620. The example method 600 may be performed, for example, with a network, a network node, a base station, a gNB, etc.

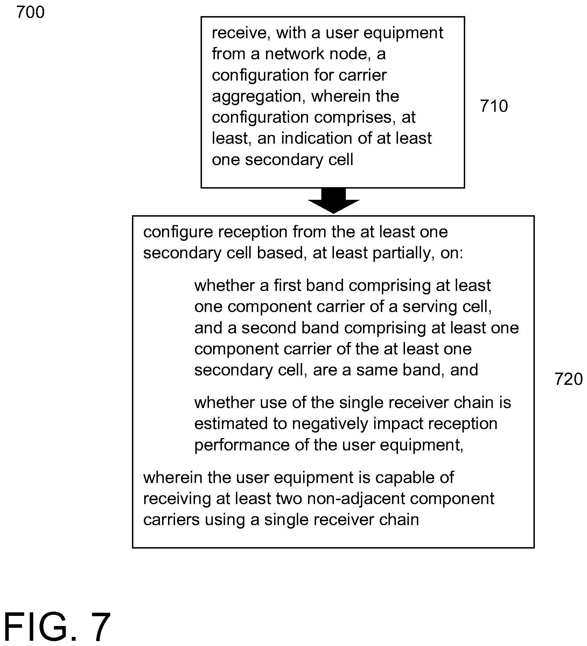

FIG. 7 illustrates the potential steps of an example method 700. The example method 700 may include: receiving, with a user equipment from a network node, a configuration for carrier aggregation, wherein the configuration comprises, at least, an indication of at least one secondary cell, 710; and configuring reception from the at least one secondary cell based, at least partially, on: whether a first band comprising at least one component carrier of a serving cell, and a second band comprising at least one component carrier of the at least one secondary cell, are a same band, and whether use of the single receiver chain is estimated to negatively impact reception performance of the user equipment, wherein the user equipment is capable of receiving at least two non-adjacent component carriers using a single receiver chain, 720. The example method 700 may be performed, for example, with a UE.

In accordance with one example embodiment, an apparatus may comprise: at least one processor; and at least one memory storing instructions that, when executed by the at least one processor, cause the apparatus at least to: receive, from a network node, an indication of whether the apparatus is allowed to use a single receiver chain for receiving at least two non-adjacent component carriers in carrier aggregation; and configure reception from at least one secondary cell based, at least partially, on the received indication. The at least two non-adjacent component carriers may comprise at least one of: at least two non-contiguous component carriers, at least two inter-band component carriers with close proximity, or at least two intra-band component carriers. The indication of whether the apparatus is allowed to use the single receiver chain for receiving the at least two non-adjacent component carriers may be received with at least one of: radio resource control signaling, medium access control signaling, downlink control information signaling, or a configuration for the carrier aggregation. The network node may comprise a network node that provides a serving cell for the apparatus in the carrier aggregation. The received indication may comprise an indication that the apparatus is allowed to use the single receiver chain for receiving the at least two non-adjacent component carriers. A band comprising a component carrier of a serving cell may be at least partially different from a band comprising at least one component carrier of the at least one secondary cell, wherein the at least two non-adjacent component carriers may comprise the component carrier of the serving cell and the at least one component carrier of the at least one secondary cell. The reception from the at least one secondary cell may comprise the example apparatus being further configured to: configure the single receiver chain for receiving at least one first component carrier of a first cell, and at least one second component carrier of the at least one secondary cell, wherein the at least two non-adjacent component carriers may comprise the at least one first component carrier and the at least one second component carrier. The received indication may comprise an indication that the apparatus is not allowed to use the single receiver chain for receiving the at least two non-adjacent component carriers. A same band may comprise a component carrier of a serving cell and at least one component carrier of the at least one secondary cell, wherein the at least two non-adjacent component carriers may comprise the component carrier of the serving cell and the at least one component carrier of the at least one secondary cell. Configuring the reception from the at least one secondary cell may comprise the example apparatus being further configured to: configure a first receiver chain for receiving at least one first component carrier of the serving cell; and configure a second receiver chain for receiving at least one second component carrier of the at least one secondary cell, wherein the at least two non-adjacent component carriers may comprise the at least one first component carrier and the at least one second component carrier. The received indication may comprise a conditional indication, wherein configuring the reception from the at least one secondary cell may comprise the example apparatus being further configured to: estimate whether use of the single receiver chain for receiving the at least two non-adjacent component carriers would negatively impact reception performance of the apparatus; in response to an estimate that use of the single receiver chain for receiving the at least two non-adjacent component carriers would negatively impact the reception performance of the apparatus, configure a first receiver chain for receiving at least one first component carrier of a first cell, and configure a second receiver chain for receiving at least one second component carrier of the at least one secondary cell, wherein the at least two non-adjacent component carriers may comprise the at least one first component carrier and the at least one secondary component carrier; and in response to an estimate that use of the single receiver chain for receiving the at least two non-adjacent component carriers would not negatively impact the reception performance of the apparatus, configure the single receiver chain for receiving the at least one first component carrier of the first cell, and the at least one second component carrier of the at least one secondary cell. The example apparatus may be further configured to: transmit, to the network node, a capability of the apparatus to receive more than one non-adjacent component carrier using the single receiver chain. The apparatus may be a user equipment.

In accordance with one example embodiment, an example method may be provided comprising: receiving, with a user equipment from a network node, an indication of whether the apparatus is allowed to use a single receiver chain for receiving at least two non-adjacent component carriers in carrier aggregation; and configuring reception from at least one secondary cell based, at least partially, on the received indication. The at least two non-adjacent component carriers may comprise at least one of: at least two non-contiguous component carriers, at least two inter-band component carriers with close proximity, or at least two intra-band component carriers. The indication of whether the user equipment is allowed to use the single receiver chain for receiving the at least two non-adjacent component carriers may be received with at least one of: radio resource control signaling, medium access control signaling, downlink control information signaling, or a configuration for the carrier aggregation. The network node may comprise a network node that provides a serving cell for the user equipment in the carrier aggregation. The received indication may comprise an indication that the user equipment is allowed to use the single receiver chain for receiving the at least two non-adjacent component carriers. A band comprising a component carrier of a serving cell may be at least partially different from a band comprising at least one component carrier of the at least one secondary cell, wherein the at least two non-adjacent component carriers may comprise the component carrier of the serving cell and the at least one component carrier of the at least one secondary cell. The configuring of the reception from the at least one secondary cell may comprise: configuring the single receiver chain for receiving at least one first component carrier of a first cell, and at least one second component carrier of the at least one secondary cell, wherein the at least two non-adjacent component carriers may comprise the at least one first component carrier and the at least one second component carrier. The received indication may comprise an indication that the user equipment is not allowed to use the single receiver chain for receiving the at least two non-adjacent component carriers. A same band may comprise a component carrier of a serving cell and at least one component carrier of the at least one secondary cell, wherein the at least two non-adjacent component carriers may comprise the component carrier of the serving cell and the at least one component carrier of the at least one secondary cell. The configuring of the reception from the at least one secondary cell may comprise: configuring a first receiver chain for receiving at least one first component carrier of the serving cell; and configuring a second receiver chain for receiving at least one second component carrier of the at least one secondary cell, wherein the at least two non-adjacent component carriers may comprise the at least one first component carrier and the at least one second component carrier. The received indication may comprise a conditional indication, wherein the configuring of the reception from the at least one secondary cell may comprise: estimates whether use of the single receiver chain for receiving the at least two non-adjacent component carriers would negatively impact reception performance of the user equipment; in response to an estimate that use of the single receiver chain for receiving the at least two non-adjacent component carriers would negatively impact the reception performance of the user equipment, configuring a first receiver chain for receiving at least one first component carrier of a first cell, and configure a second receiver chain for receiving at least one second component carrier of the at least one secondary cell, wherein the at least two non-adjacent component carriers may comprise the at least one first component carrier and the at least one secondary component carrier; and in response to an estimate that use of the single receiver chain for receiving the at least two non-adjacent component carriers would not negatively impact the reception performance of the user equipment, configuring the single receiver chain for receiving the at least one first component carrier of the first cell, and the at least one second component carrier of the at least one secondary cell. The example method may further comprise: transmitting, to the network node, a capability of the user equipment to receive more than one non-adjacent component carrier using the single receiver chain.

In accordance with one example embodiment, an apparatus may comprise: circuitry configured to perform: receiving, with a user equipment from a network node, an indication of whether the apparatus is allowed to use a single receiver chain for receiving at least two non-adjacent component carriers in carrier aggregation; and circuitry configured to perform: configuring reception from at least one secondary cell based, at least partially, on the received indication.

In accordance with one example embodiment, an apparatus may comprise: processing circuitry; memory circuitry including computer readable code, the memory circuitry and the computer readable code configured to, with the processing circuitry, enable the apparatus to: receive, from a network node, an indication of whether the apparatus is allowed to use a single receiver chain for receiving at least two non-adjacent component carriers in carrier aggregation; and configure reception from at least one secondary cell based, at least partially, on the received indication.

As used in this application, the term "circuitry" or "means" may refer to one or more or all of the following: (a) hardware-only circuit implementations (such as implementations in analog, digital and/or quantum circuitry) and (b) combinations of hardware circuit(s) and software, such as (as applicable): (i) a combination of analog, digital and/or quantum hardware circuit(s) with software/firmware and (ii) any or all portions of hardware processor(s) (including digital and/or quantum processor(s)) with software, and memory(ies) that work together to cause an apparatus, such as a mobile device, computing device, or server, to perform various functions) and (c) any or all portions of hardware circuit(s), such as a microprocessor(s), processor(s) and/or quantum processor(s), that requires software (e.g., firmware) for operation, but the software may not be present when it is not needed for operation. This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

In accordance with one example embodiment, an apparatus may comprise means for: receiving, from a network node, an indication of whether the apparatus is allowed to use a single receiver chain for receiving at least two non-adjacent component carriers in carrier aggregation; and configuring reception from at least one secondary cell based, at least partially, on the received indication. The at least two non-adjacent component carriers may comprise at least one of: at least two non-contiguous component carriers, at least two inter-band component carriers with close proximity, or at least two intra-band component carriers. The indication of whether the apparatus is allowed to use the single receiver chain for receiving the at least two non-adjacent component carriers may be received with at least one of: radio resource control signaling, medium access control signaling, downlink control information signaling, or a configuration for the carrier aggregation. The network node may comprise a network node that provides a serving cell for the apparatus in the carrier aggregation. The received indication may comprise an indication that the apparatus is allowed to use the single receiver chain for receiving the at least two non-adjacent component carriers. A band comprising a component carrier of a serving cell may be at least partially different from a band comprising at least one component carrier of the at least one secondary cell, wherein the at least two non-adjacent component carriers may comprise the component carrier of the serving cell and the at least one component carrier of the at least one secondary cell. The means configured for configuring the reception from the at least one secondary cell may comprise means configured for: configuring the single receiver chain for receiving at least one first component carrier of a first cell, and at least one second component carrier of the at least one secondary cell, wherein the at least two non-adjacent component carriers may comprise the at least one first component carrier and the at least one second component carrier. The received indication may comprise an indication that the apparatus is not allowed to use the single receiver chain for receiving the at least two non-adjacent component carriers. A same band may comprise a component carrier of a serving cell and at least one component carrier of the at least one secondary cell, wherein the at least two non-adjacent component carriers may comprise the component carrier of the serving cell and the at least one component carrier of the at least one secondary cell. The means configured for configuring the reception from the at least one secondary cell may comprise means configured for: configuring a first receiver chain for receiving at least one first component carrier of the serving cell; and configuring a second receiver chain for receiving at least one second component carrier of the at least one secondary cell, wherein the at least two non-adjacent component carriers may comprise the at least one first component carrier and the at least one second component carrier. The received indication may comprise a conditional indication, wherein the means configured for configuring the reception from the at least one secondary cell may comprise means configured for: estimating whether use of the single receiver chain for receiving the at least two non-adjacent component carriers would negatively impact reception performance of the apparatus; in response to an estimate that use of the single receiver chain for receiving the at least two non-adjacent component carriers would negatively impact the reception performance of the apparatus, configuring a first receiver chain for receiving at least one first component carrier of a first cell, and configure a second receiver chain for receiving at least one second component carrier of the at least one secondary cell, wherein the at least two non-adjacent component carriers may comprise the at least one first component carrier and the at least one secondary component carrier; and in response to an estimate that use of the single receiver chain for receiving the at least two non-adjacent component carriers would not negatively impact the reception performance of the apparatus, configuring the single receiver chain for receiving the at least one first component carrier of the first cell, and the at least one second component carrier of the at least one secondary cell. The means may be further configured for: transmitting, to the network node, a capability of the apparatus to receive more than one non-adjacent component carrier using the single receiver chain. The apparatus may be a user equipment.

A processor, memory, and/or example algorithms (which may be encoded as instructions, program, or code) may be provided as example means for providing or causing performance of operation.

In accordance with one example embodiment, a (non-transitory) computer-readable medium comprising instructions stored thereon which, when executed by at least one processor, cause the at least one processor to: cause receiving, with a user equipment from a network node, of an indication of whether the user equipment is allowed to use a single receiver chain for receiving at least two non-adjacent component carriers in carrier aggregation; and configure reception from at least one secondary cell based, at least partially, on the received indication.

In accordance with one example embodiment, a (non-transitory) computer-readable medium comprising program instructions stored thereon for performing at least the following: causing receiving, with a user equipment from a network node, of an indication of whether the user equipment is allowed to use a single receiver chain for receiving at least two non-adjacent component carriers in carrier aggregation; and configuring reception from at least one secondary cell based, at least partially, on the received indication. The at least two non-adjacent component carriers may comprise at least one of: at least two non-contiguous component carriers, at least two inter-band component carriers with close proximity, or at least two intra-band component carriers. The indication of whether the user equipment is allowed to use the single receiver chain for receiving the at least two non-adjacent component carriers may be received with at least one of: radio resource control signaling, medium access control signaling, downlink control information signaling, or a configuration for the carrier aggregation. The network node may comprise a network node that provides a serving cell for the user equipment in the carrier aggregation. The received indication may comprise an indication that the user equipment is allowed to use the single receiver chain for receiving the at least two non-adjacent component carriers. A band comprising a component carrier of a serving cell may be at least partially different from a band comprising at least one component carrier of the at least one secondary cell, wherein the at least two non-adjacent component carriers may comprise the component carrier of the serving cell and the at least one component carrier of the at least one secondary cell. The program instructions stored thereon for performing configuring the reception from the at least one secondary cell may comprise program instructions for performing: configuring the single receiver chain for receiving at least one first component carrier of a first cell, and at least one second component carrier of the at least one secondary cell, wherein the at least two non-adjacent component carriers may comprise the at least one first component carrier and the at least one second component carrier. The received indication may comprise an indication that the user equipment is not allowed to use the single receiver chain for receiving the at least two non-adjacent component carriers. A same band may comprise a component carrier of a serving cell and at least one component carrier of the at least one secondary cell, wherein the at least two non-adjacent component carriers may comprise the component carrier of the serving cell and the at least one component carrier of the at least one secondary cell. The program instructions stored thereon for performing configuring the reception from the at least one secondary cell may comprise program instructions for performing: configuring a first receiver chain for receiving at least one first component carrier of the serving cell; and configuring a second receiver chain for receiving at least one second component carrier of the at least one secondary cell, wherein the at least two non-adjacent component carriers may comprise the at least one first component carrier and the at least one second component carrier. The received indication may comprise a conditional indication, wherein the program instructions stored thereon for performing configuring the reception from the at least one secondary cell may comprise program instructions for performing: estimating whether use of the single receiver chain for receiving the at least two non-adjacent component carriers would negatively impact reception performance of the user equipment; in response to an estimate that use of the single receiver chain for receiving the at least two non-adjacent component carriers would negatively impact the reception performance of the user equipment, configuring a first receiver chain for receiving at least one first component carrier of a first cell, and configure a second receiver chain for receiving at least one second component carrier of the at least one secondary cell, wherein the at least two non-adjacent component carriers may comprise the at least one first component carrier and the at least one secondary component carrier; and in response to an estimate that use of the single receiver chain for receiving the at least two non-adjacent component carriers would not negatively impact the reception performance of the user equipment, configuring the single receiver chain for receiving the at least one first component carrier of the first cell, and the at least one second component carrier of the at least one secondary cell. The example computer-readable medium may further comprise program instructions stored thereon for performing: causing transmitting, to the network node, of a capability of the user equipment to receive more than one non-adjacent component carrier using the single receiver chain.

In accordance with one example embodiment, a (non-transitory) program storage device readable by a machine may be provided, tangibly embodying instructions executable by the machine for performing operations, the operations comprising: causing receiving, with a user equipment from a network node, of an indication of whether the user equipment is allowed to use a single receiver chain for receiving at least two non-adjacent component carriers in carrier aggregation; and configuring reception from at least one secondary cell based, at least partially, on the received indication.

In accordance with one example embodiment, a (non-transitory) computer-readable medium comprising instructions that, when executed by an apparatus, cause the apparatus to perform at least the following: causing receiving, with a user equipment from a network node, of an indication of whether the user equipment is allowed to use a single receiver chain for receiving at least two non-adjacent component carriers in carrier aggregation; and configuring reception from at least one secondary cell based, at least partially, on the received indication.

In accordance with one example embodiment, a computer implemented system comprising: at least one processor and at least one (non-transitory) memory storing instructions that, when executed by the at least one processor, cause the system at least to perform: causing receiving, with a user equipment from a network node, of an indication of whether the user equipment is allowed to use a single receiver chain for receiving at least two non-adjacent component carriers in carrier aggregation; and configuring reception from at least one secondary cell based, at least partially, on the received indication.

In accordance with one example embodiment, a computer implemented system comprising: means for causing receiving, with a user equipment from a network node, of an indication of whether the user equipment is allowed to use a single receiver chain for receiving at least two non-adjacent component carriers in carrier aggregation; and means for configuring reception from at least one secondary cell based, at least partially, on the received indication.

In accordance with one example embodiment, an apparatus may comprise: at least one processor; and at least one memory storing instructions that, when executed by the at least one processor, cause the apparatus at least to: determine based, at least partially, on a first band comprising a serving cell configured for a user equipment and at least one second band comprising at least one secondary cell configured for the user equipment, whether to allow the user equipment to use a single receiver chain for receiving at least two non-adjacent component carriers in the carrier aggregation; and transmit, to the user equipment, an indication of whether the user equipment is allowed to use the single receiver chain for receiving the at least two non-adjacent component carriers in the carrier aggregation. The example apparatus may be further configured to: configure the user equipment with the serving cell and the at least one secondary cell. Whether to allow the user equipment to use the single receiver chain for receiving the at least two non-adjacent component carriers in the carrier aggregation may be determined further based on at least one of: a capability of the user equipment, or feedback received from the user equipment. The at least two non-adjacent component carriers may comprise at least one of: at least two non-contiguous component carriers, at least two inter-band component carriers with close proximity, or at least two intra-band component carriers. The indication of whether the user equipment is allowed to use the single receiver chain for receiving the at least two non-adjacent component carriers may be transmitted with at least one of: radio resource control signaling, medium access control signaling, downlink control information signaling, or a configuration for the carrier aggregation. The apparatus may be configured to provide the serving cell for the user equipment in the carrier aggregation. The indication of whether the user equipment is allowed to use the single receiver chain for receiving the at least two non-adjacent component carriers may comprise an indication that the user equipment is allowed to use the single receiver chain for receiving the at least two non-adjacent component carriers based, at least partially, on the first band being at least partially different from the at least one second band. The indication of whether the user equipment is allowed to use the single receiver chain for receiving the at least two non-adjacent component carriers may comprise an indication that the user equipment is not allowed to use the single receiver chain for receiving the at least two non-adjacent component carriers based, at least partially, on the first band being the same as the at least one second band. The indication of whether the user equipment is allowed to use the single receiver chain for receiving the at least two non-adjacent component carriers may comprise an indication that is conditional based, at least partially, on whether the use of the single receiver chain for receiving the at least two non-adjacent component carriers is estimated to negatively impact a reception performance of the user equipment. The example apparatus may be further configured to: receive, from the user equipment, a capability of the user equipment to receive more than one non-adjacent component carrier using the single receiver chain. The at least two non-adjacent component carriers may comprise a component carrier of the serving cell and a component carrier of the at least one secondary cell.

In accordance with one example embodiment, an example method may be provided comprising: with a network node, determining based, at least partially, on a first band comprising a serving cell configured for a user equipment and at least one second band comprising at least one secondary cell configured for the user equipment, whether to allow the user equipment to use a single receiver chain for receiving at least two non-adjacent component carriers in the carrier aggregation; and transmitting, to the user equipment, an indication of whether the user equipment is allowed to use the single receiver chain for receiving the at least two non-adjacent component carriers in the carrier aggregation. The example method may further comprise: configuring the user equipment with the serving cell and the at least one secondary cell. Whether to allow the user equipment to use the single receiver chain for receiving the at least two non-adjacent component carriers in the carrier aggregation may be determined further based on at least one of: a capability of the user equipment, or feedback received from the user equipment. The at least two non-adjacent component carriers may comprise at least one of: at least two non-contiguous component carriers, at least two inter-band component carriers with close proximity, or at least two intra-band component carriers. The indication of whether the user equipment is allowed to use the single receiver chain for receiving the at least two non-adjacent component carriers may be transmitted with at least one of: radio resource control signaling, medium access control signaling, downlink control information signaling, or a configuration for the carrier aggregation. The network node may be configured to provide the serving cell for the user equipment in the carrier aggregation. The indication of whether the user equipment is allowed to use the single receiver chain for receiving the at least two non-adjacent component carriers may comprise an indication that the network node is allowed to use the single receiver chain for receiving the at least two non-adjacent component carriers based, at least partially, on the first band being at least partially different from the at least one second band. The indication of whether the user equipment is allowed to use the single receiver chain for receiving the at least two non-adjacent component carriers may comprise an indication that the network node is not allowed to use the single receiver chain for receiving the at least two non-adjacent component carriers based, at least partially, on the first band being the same as the at least one second band. The indication of whether the user equipment is allowed to use the single receiver chain for receiving the at least two non-adjacent component carriers may comprise an indication that is conditional based, at least partially, on whether the use of the single receiver chain for receiving the at least two non-adjacent component carriers is estimated to negatively impact a reception performance of the user equipment. The example method may further comprise: receiving, from the user equipment, a capability of the user equipment to receive more than one non-adjacent component carrier using the single receiver chain. The at least two non-adjacent component carriers may comprise a component carrier of the serving cell and a component carrier of the at least one secondary cell.

In accordance with one example embodiment, an apparatus may comprise: circuitry configured to perform: with a network node, determining based, at least partially, on a first band comprising a serving cell configured for a user equipment and at least one second band comprising at least one secondary cell configured for the user equipment, whether to allow the user equipment to use a single receiver chain for receiving at least two non-adjacent component carriers in the carrier aggregation; and circuitry configured to perform: transmitting, to the user equipment, an indication of whether the user equipment is allowed to use the single receiver chain for receiving the at least two non-adjacent component carriers in the carrier aggregation.

In accordance with one example embodiment, an apparatus may comprise: processing circuitry; memory circuitry including computer readable code, the memory circuitry and the computer readable code configured to, with the processing circuitry, enable the apparatus to: determine based, at least partially, on a first band comprising a serving cell configured for a user equipment and at least one second band comprising at least one secondary cell configured for the user equipment, whether to allow the user equipment to use a single receiver chain for receiving at least two non-adjacent component carriers in the carrier aggregation; and transmit, to the user equipment, an indication of whether the user equipment is allowed to use the single receiver chain for receiving the at least two non-adjacent component carriers in the carrier aggregation.

In accordance with one example embodiment, an apparatus may comprise means for: determining based, at least partially, on a first band comprising a serving cell configured for a user equipment and at least one second band comprising at least one secondary cell configured for the user equipment, whether to allow the user equipment to use a single receiver chain for receiving at least two non-adjacent component carriers in the carrier aggregation; and transmitting, to the user equipment, an indication of whether the user equipment is allowed to use the single receiver chain for receiving the at least two non-adjacent component carriers in the carrier aggregation. The means may be further configured for: configuring the user equipment with the serving cell and the at least one secondary cell. Whether to allow the user equipment to use the single receiver chain for receiving the at least two non-adjacent component carriers in the carrier aggregation may be determined further based on at least one of: a capability of the user equipment, or feedback received from the user equipment. The at least two non-adjacent component carriers may comprise at least one of: at least two non-contiguous component carriers, at least two inter-band component carriers with close proximity, or at least two intra-band component carriers. The indication of whether the user equipment is allowed to use the single receiver chain for receiving the at least two non-adjacent component carriers may be transmitted with at least one of: radio resource control signaling, medium access control signaling, downlink control information signaling, or a configuration for the carrier aggregation. The apparatus may be configured to provide the serving cell for the user equipment in the carrier aggregation. The indication of whether the user equipment is allowed to use the single receiver chain for receiving the at least two non-adjacent component carriers may comprise an indication that the user equipment is allowed to use the single receiver chain for receiving the at least two non-adjacent component carriers based, at least partially, on the first band being at least partially different from the at least one second band. The indication of whether the user equipment is allowed to use the single receiver chain for receiving the at least two non-adjacent component carriers may comprise an indication that the user equipment is not allowed to use the single receiver chain for receiving the at least two non-adjacent component carriers based, at least partially, on the first band being the same as the at least one second band. The indication of whether the user equipment is allowed to use the single receiver chain for receiving the at least two non-adjacent component carriers may comprise an indication that is conditional based, at least partially, on whether the use of the single receiver chain for receiving the at least two non-adjacent component carriers is estimated to negatively impact a reception performance of the user equipment. The means may be further configured for: causing receiving, from the user equipment, of a capability of the user equipment to receive more than one non-adjacent component carrier using the single receiver chain. The at least two non-adjacent component carriers may comprise a component carrier of the serving cell and a component carrier of the at least one secondary cell.

In accordance with one example embodiment, a (non-transitory) computer-readable medium comprising instructions stored thereon which, when executed with at least one processor, cause the at least one processor to: with a network node, determine based, at least partially, on a first band comprising a serving cell configured for a user equipment and at least one second band comprising at least one secondary cell configured for the user equipment, whether to allow the user equipment to use a single receiver chain for receiving at least two non-adjacent component carriers in the carrier aggregation; and cause transmitting, to the user equipment, of an indication of whether the user equipment is allowed to use the single receiver chain for receiving the at least two non-adjacent component carriers in the carrier aggregation.

In accordance with one example embodiment, a (non-transitory) computer-readable medium comprising program instructions stored thereon for performing at least the following: with a network node, determining based, at least partially, on a first band comprising a serving cell configured for a user equipment and at least one second band comprising at least one secondary cell configured for the user equipment, whether to allow the user equipment to use a single receiver chain for receiving at least two non-adjacent component carriers in the carrier aggregation; and causing transmitting, to the user equipment, of an indication of whether the user equipment is allowed to use the single receiver chain for receiving the at least two non-adjacent component carriers in the carrier aggregation. The example computer-readable medium may further comprise program instructions stored thereon for performing: configuring the user equipment with the serving cell and the at least one secondary cell. Whether to allow the user equipment to use the single receiver chain for receiving the at least two non-adjacent component carriers in the carrier aggregation may be determined further based on at least one of: a capability of the user equipment, or feedback received from the user equipment. The at least two non-adjacent component carriers may comprise at least one of: at least two non-contiguous component carriers, at least two inter-band component carriers with close proximity, or at least two intra-band component carriers. The indication of whether the user equipment is allowed to use the single receiver chain for receiving the at least two non-adjacent component carriers may be transmitted with at least one of: radio resource control signaling, medium access control signaling, downlink control information signaling, or a configuration for the carrier aggregation. The network node may be configured to provide the serving cell for the user equipment in the carrier aggregation. The indication of whether the user equipment is allowed to use the single receiver chain for receiving the at least two non-adjacent component carriers may comprise an indication that the user equipment is allowed to use the single receiver chain for receiving the at least two non-adjacent component carriers based, at least partially, on the first band being at least partially different from the at least one second band. The indication of whether the user equipment is allowed to use the single receiver chain for receiving the at least two non-adjacent component carriers may comprise an indication that the user equipment is not allowed to use the single receiver chain for receiving the at least two non-adjacent component carriers based, at least partially, on the first band being the same as the at least one second band. The indication of whether the user equipment is allowed to use the single receiver chain for receiving the at least two non-adjacent component carriers may comprise an indication that is conditional based, at least partially, on whether the use of the single receiver chain for receiving the at least two non-adjacent component carriers is estimated to negatively impact a reception performance of the user equipment. The example computer-readable medium may further comprise program instructions stored thereon for performing: causing receiving, from the user equipment, of a capability of the user equipment to receive more than one non-adjacent component carrier using the single receiver chain. The at least two non-adjacent component carriers may comprise a component carrier of the serving cell and a component carrier of the at least one secondary cell.

In accordance with one example embodiment, a (non-transitory) program storage device readable by a machine may be provided, tangibly embodying instructions executable by the machine for performing operations, the operations comprising: with a network node, determining based, at least partially, on a first band comprising a serving cell configured for a user equipment and at least one second band comprising at least one secondary cell configured for the user equipment, whether to allow the user equipment to use a single receiver chain for receiving at least two non-adjacent component carriers in the carrier aggregation; and causing transmitting, to the user equipment, of an indication of whether the user equipment is allowed to use the single receiver chain for receiving the at least two non-adjacent component carriers in the carrier aggregation.

In accordance with one example embodiment, a (non-transitory) computer-readable medium comprising instructions that, when executed by an apparatus, cause the apparatus to perform at least the following: with a network node, determining based, at least partially, on a first band comprising a serving cell configured for a user equipment and at least one second band comprising at least one secondary cell configured for the user equipment, whether to allow the user equipment to use a single receiver chain for receiving at least two non-adjacent component carriers in the carrier aggregation; and causing transmitting, to the user equipment, of an indication of whether the user equipment is allowed to use the single receiver chain for receiving the at least two non-adjacent component carriers in the carrier aggregation.

In accordance with one example embodiment, a computer implemented system comprising: at least one processor and at least one (non-transitory) memory storing instructions that, when executed by the at least one processor, cause the system at least to perform: with a network node, determining based, at least partially, on a first band comprising a serving cell configured for a user equipment and at least one second band comprising at least one secondary cell configured for the user equipment, whether to allow the user equipment to use a single receiver chain for receiving at least two non-adjacent component carriers in the carrier aggregation; and causing transmitting, to the user equipment, of an indication of whether the user equipment is allowed to use the single receiver chain for receiving the at least two non-adjacent component carriers in the carrier aggregation.

In accordance with one example embodiment, a computer implemented system comprising: means for with a network node, determining based, at least partially, on a first band comprising a serving cell configured for a user equipment and at least one second band comprising at least one secondary cell configured for the user equipment, whether to allow the user equipment to use a single receiver chain for receiving at least two non-adjacent component carriers in the carrier aggregation; and means for causing transmitting, to the user equipment, of an indication of whether the user equipment is allowed to use the single receiver chain for receiving the at least two non-adjacent component carriers in the carrier aggregation.

In accordance with one example embodiment, an apparatus may comprise: at least one processor; and at least one memory storing instructions that, when executed by the at least one processor, cause the apparatus at least to: receive, from a network node, a configuration for carrier aggregation, wherein the configuration may comprise, at least, an indication of at least one secondary cell; and configure reception from the at least one secondary cell based, at least partially, on: whether a first band comprising at least one component carrier of a serving cell, and a second band comprising at least one component carrier of the at least one secondary cell, are a same band, and whether use of the single receiver chain is estimated to negatively impact reception performance of the apparatus, wherein the apparatus may be capable of receiving at least two non-adjacent component carriers using a single receiver chain. The at least two non-adjacent component carriers may comprise at least one of: at least two non-contiguous component carriers, at least two inter-band component carriers with close proximity, or at least two intra-band component carriers. The reception from the at least one secondary cell may be further configured based, at least partially, on at least one of: a capability of the apparatus, or one or more measurements associated with at least one of the serving cell or the at least one secondary cell. Configuring the reception from the at least one secondary cell may comprise the example apparatus being further configured to: determine to not use the single receiver chain to receive the at least two non-adjacent component carriers based on at least one of: the first band and the second band comprising the same band, or an estimate that use of the single receiver chain for receiving the at least two non-adjacent component carriers would negatively impact the reception performance of the apparatus; configure a first receiver chain for receiving the at least one component carrier of the serving cell; and configure a second receiver chain for receiving the at least one component carrier of the at least one secondary cell, wherein the at least two non-adjacent component carriers may comprise the at least one component carrier of the serving cell and the at least one component carrier of the at least one secondary cell. Configuring the reception from the at least one secondary cell may comprise the example apparatus being further configured to: determine to use the single receiver chain to receive the at least two non-adjacent component carriers based on at least one of: the first band and the second band comprising at least partially different bands, or an estimate that use of the single receiver chain for receiving the at least two non-adjacent component carriers would not negatively impact the reception performance of the apparatus; and configure the single receiver chain for receiving the at least one component carrier from the serving cell, and the at least one component carrier of the at least one secondary cell, wherein the at least two non-adjacent component carriers may comprise the at least one component carrier of the serving cell and the at least one component carrier of the at least one secondary cell. The apparatus may be a user equipment. The network node may comprise a network node that provides the serving cell for the apparatus in the carrier aggregation. The configuration for carrier aggregation may be received via at least one of: radio resource control signaling, medium access control signaling, or downlink control information signaling.

In accordance with one example embodiment, an example method may be provided comprising: receiving, with a user equipment from a network node, a configuration for carrier aggregation, wherein the configuration may comprise, at least, an indication of at least one secondary cell; and configuring reception from the at least one secondary cell based, at least partially, on: whether a first band comprising at least one component carrier of a serving cell, and a second band comprising at least one component carrier of the at least one secondary cell, are a same band, and whether use of the single receiver chain is estimated to negatively impact reception performance of the user equipment, wherein the user equipment may be capable of receiving at least two non-adjacent component carriers using a single receiver chain. The at least two non-adjacent component carriers may comprise at least one of: at least two non-contiguous component carriers, at least two inter-band component carriers with close proximity, or at least two intra-band component carriers. The reception from the at least one secondary cell may be further configured based, at least partially, on at least one of: a capability of the user equipment, or one or more measurements associated with at least one of the serving cell or the at least one secondary cell. The configuring of the reception from the at least one secondary cell may comprise: determining to not use the single receiver chain to receive the at least two non-adjacent component carriers based on at least one of: the first band and the second band comprising the same band, or an estimate that use of the single receiver chain for receiving the at least two non-adjacent component carriers would negatively impact the reception performance of the user equipment; configuring a first receiver chain for receiving the at least one component carrier of the serving cell; and configuring a second receiver chain for receiving the at least one component carrier of the at least one secondary cell, wherein the at least two non-adjacent component carriers may comprise the at least one component carrier of the serving cell and the at least one component carrier of the at least one secondary cell. The configuring of the reception from the at least one secondary cell may comprise: determining to use the single receiver chain to receive the at least two non-adjacent component carriers based on at least one of: the first band and the second band comprising at least partially different bands, or an estimate that use of the single receiver chain for receiving the at least two non-adjacent component carriers would not negatively impact the reception performance of the user equipment; and configuring the single receiver chain for receiving the at least one component carrier from the serving cell, and the at least one component carrier of the at least one secondary cell, wherein the at least two non-adjacent component carriers may comprise the at least one component carrier of the serving cell and the at least one component carrier of the at least one secondary cell. The network node may comprise a network node that provides the serving cell for the user equipment in the carrier aggregation. The configuration for carrier aggregation may be received via at least one of: radio resource control signaling, medium access control signaling, or downlink control information signaling.

In accordance with one example embodiment, an apparatus may comprise: circuitry configured to perform: receiving, with a user equipment from a network node, a configuration for carrier aggregation, wherein the configuration may comprise, at least, an indication of at least one secondary cell; and circuitry configured to perform: configuring reception from the at least one secondary cell based, at least partially, on: whether a first band comprising at least one component carrier of a serving cell, and a second band comprising at least one component carrier of the at least one secondary cell, are a same band, and whether use of the single receiver chain is estimated to negatively impact reception performance of the user equipment, wherein the user equipment may be capable of receiving at least two non-adjacent component carriers using a single receiver chain.

In accordance with one example embodiment, an apparatus may comprise: processing circuitry; memory circuitry including computer readable code, the memory circuitry and the computer readable code configured to, with the processing circuitry, enable the apparatus to: receive, from a network node, a configuration for carrier aggregation, wherein the configuration may comprise, at least, an indication of at least one secondary cell; and configure reception from the at least one secondary cell based, at least partially, on: whether a first band comprising at least one component carrier of a serving cell, and a second band comprising at least one component carrier of the at least one secondary cell, are a same band, and whether use of the single receiver chain is estimated to negatively impact reception performance of the apparatus, wherein the apparatus may be capable of receiving at least two non-adjacent component carriers using a single receiver chain.

In accordance with one example embodiment, an apparatus may comprise means for: receiving, from a network node, a configuration for carrier aggregation, wherein the configuration may comprise, at least, an indication of at least one secondary cell; and configuring reception from the at least one secondary cell based, at least partially, on: whether a first band comprising at least one component carrier of a serving cell, and a second band comprising at least one component carrier of the at least one secondary cell, are a same band, and whether use of the single receiver chain is estimated to negatively impact reception performance of the apparatus, wherein the apparatus may be capable of receiving at least two non-adjacent component carriers using a single receiver chain. The at least two non-adjacent component carriers may comprise at least one of: at least two non-contiguous component carriers, at least two inter-band component carriers with close proximity, or at least two intra-band component carriers. The reception from the at least one secondary cell may be further configured based, at least partially, on at least one of: a capability of the apparatus, or one or more measurements associated with at least one of the serving cell or the at least one secondary cell. The means configured for configuring the reception from the at least one secondary cell may comprise means configured for: determining to not use the single receiver chain to receive the at least two non-adjacent component carriers based on at least one of: the first band and the second band comprising the same band, or an estimate that use of the single receiver chain for receiving the at least two non-adjacent component carriers would negatively impact the reception performance of the apparatus; configuring a first receiver chain for receiving the at least one component carrier of the serving cell; and configuring a second receiver chain for receiving the at least one component carrier of the at least one secondary cell, wherein the at least two non-adjacent component carriers may comprise the at least one component carrier of the serving cell and the at least one component carrier of the at least one secondary cell. The means configured for configuring the reception from the at least one secondary cell may comprise means configured for: determining to use the single receiver chain to receive the at least two non-adjacent component carriers based on at least one of: the first band and the second band comprising at least partially different bands, or an estimate that use of the single receiver chain for receiving the at least two non-adjacent component carriers would not negatively impact the reception performance of the apparatus; and configuring the single receiver chain for receiving the at least one component carrier from the serving cell, and the at least one component carrier of the at least one secondary cell, wherein the at least two non-adjacent component carriers may comprise the at least one component carrier of the serving cell and the at least one component carrier of the at least one secondary cell. The apparatus may be a user equipment. The network node may comprise a network node that provides the serving cell for the apparatus in the carrier aggregation. The configuration for carrier aggregation may be received via at least one of: radio resource control signaling, medium access control signaling, or downlink control information signaling.

In accordance with one example embodiment, a (non-transitory) computer-readable medium comprising instructions stored thereon which, when executed by at least one processor, cause the at least one processor to: cause receiving, with a user equipment from a network node, of a configuration for carrier aggregation, wherein the configuration may comprise, at least, an indication of at least one secondary cell; and configure reception from the at least one secondary cell based, at least partially, on: whether a first band comprising at least one component carrier of a serving cell, and a second band comprising at least one component carrier of the at least one secondary cell, are a same band, and whether use of the single receiver chain is estimated to negatively impact reception performance of the user equipment, wherein the user equipment may be capable of receiving at least two non-adjacent component carriers using a single receiver chain.

In accordance with one example embodiment, a (non-transitory) computer-readable medium comprising program instructions stored thereon for performing at least the following: causing receiving, with a user equipment from a network node, of a configuration for carrier aggregation, wherein the configuration may comprise, at least, an indication of at least one secondary cell; and configuring reception from the at least one secondary cell based, at least partially, on: whether a first band comprising at least one component carrier of a serving cell, and a second band comprising at least one component carrier of the at least one secondary cell, are a same band, and whether use of the single receiver chain is estimated to negatively impact reception performance of the user equipment, wherein the user equipment may be capable of receiving at least two non-adjacent component carriers using a single receiver chain. The at least two non-adjacent component carriers may comprise at least one of: at least two non-contiguous component carriers, at least two inter-band component carriers with close proximity, or at least two intra-band component carriers. The reception from the at least one secondary cell may be further configured based, at least partially, on at least one of: a capability of the user equipment, or one or more measurements associated with at least one of the serving cell or the at least one secondary cell. The program instructions for performing configuring the reception from the at least one secondary cell may comprise program instructions for performing: determining to not use the single receiver chain to receive the at least two non-adjacent component carriers based on at least one of: the first band and the second band comprising the same band, or an estimate that use of the single receiver chain for receiving the at least two non-adjacent component carriers would negatively impact the reception performance of the user equipment; configuring a first receiver chain for receiving the at least one component carrier of the serving cell; and configuring a second receiver chain for receiving the at least one component carrier of the at least one secondary cell, wherein the at least two non-adjacent component carriers may comprise the at least one component carrier of the serving cell and the at least one component carrier of the at least one secondary cell. The program instructions for performing configuring the reception from the at least one secondary cell may comprise program instructions for performing: determining to use the single receiver chain to receive the at least two non-adjacent component carriers based on at least one of: the first band and the second band comprising at least partially different bands, or an estimate that use of the single receiver chain for receiving the at least two non-adjacent component carriers would not negatively impact the reception performance of the user equipment; and configuring the single receiver chain for receiving the at least one component carrier from the serving cell, and the at least one component carrier of the at least one secondary cell, wherein the at least two non-adjacent component carriers may comprise the at least one component carrier of the serving cell and the at least one component carrier of the at least one secondary cell. The network node may comprise a network node that provides the serving cell for the user equipment in the carrier aggregation. The configuration for carrier aggregation may be received via at least one of: radio resource control signaling, medium access control signaling, or downlink control information signaling.

In accordance with one example embodiment, a (non-transitory) program storage device readable by a machine may be provided, tangibly embodying instructions executable by the machine for performing operations, the operations comprising: causing receiving, with a user equipment from a network node, of a configuration for carrier aggregation, wherein the configuration may comprise, at least, an indication of at least one secondary cell; and configuring reception from the at least one secondary cell based, at least partially, on: whether a first band comprising at least one component carrier of a serving cell, and a second band comprising at least one component carrier of the at least one secondary cell, are a same band, and whether use of the single receiver chain is estimated to negatively impact reception performance of the user equipment, wherein the user equipment may be capable of receiving at least two non-adjacent component carriers using a single receiver chain.

In accordance with one example embodiment, a (non-transitory) computer-readable medium comprising instructions that, when executed by an apparatus, cause the apparatus to perform at least the following: causing receiving, with a user equipment from a network node, of a configuration for carrier aggregation, wherein the configuration may comprise, at least, an indication of at least one secondary cell; and configuring reception from the at least one secondary cell based, at least partially, on: whether a first band comprising at least one component carrier of a serving cell, and a second band comprising at least one component carrier of the at least one secondary cell, are a same band, and whether use of the single receiver chain is estimated to negatively impact reception performance of the user equipment, wherein the user equipment may be capable of receiving at least two non-adjacent component carriers using a single receiver chain.

In accordance with one example embodiment, a computer implemented system comprising: at least one processor and at least one (non-transitory) memory storing instructions that, when executed by the at least one processor, cause the system at least to perform: causing receiving, with a user equipment from a network node, of a configuration for carrier aggregation, wherein the configuration may comprise, at least, an indication of at least one secondary cell; and configuring reception from the at least one secondary cell based, at least partially, on: whether a first band comprising at least one component carrier of a serving cell, and a second band comprising at least one component carrier of the at least one secondary cell, are a same band, and whether use of the single receiver chain is estimated to negatively impact reception performance of the user equipment, wherein the user equipment may be capable of receiving at least two non-adjacent component carriers using a single receiver chain.

In accordance with one example embodiment, a computer implemented system comprising: means for causing receiving, with a user equipment from a network node, of a configuration for carrier aggregation, wherein the configuration may comprise, at least, an indication of at least one secondary cell; and means for configuring reception from the at least one secondary cell based, at least partially, on: whether a first band comprising at least one component carrier of a serving cell, and a second band comprising at least one component carrier of the at least one secondary cell, are a same band, and whether use of the single receiver chain is estimated to negatively impact reception performance of the user equipment, wherein the user equipment may be capable of receiving at least two non-adjacent component carriers using a single receiver chain.

The term "non-transitory," as used herein, is a limitation of the medium itself (i.e. tangible, not a signal) as opposed to a limitation on data storage persistency (e.g., RAM vs. ROM).

As used herein, the terms "the at least one" and "the one or more" mean "any one of the at least one" and "any one of the one or more", respectively.

It should be understood that the foregoing description is only illustrative. Various alternatives and modifications can be devised by those skilled in the art. For example, features recited in the various dependent claims could be combined with each other in any suitable combination(s). In addition, features from different embodiments described above could be selectively combined into a new embodiment. Accordingly, the description is intended to embrace all such alternatives, modification and variances which fall within the scope of the appended claims.

## Claims

1. An apparatus comprising:
at least one processor; and
at least one memory storing instructions that, when executed by the at least one processor, cause the apparatus at least to:
receive, from a network node, a configuration for carrier aggregation, wherein the configuration comprises, at least, an indication of at least one secondary cell; and
configure reception from the at least one secondary cell based, at least partially, on:
whether a first band comprising at least one component carrier of a serving cell, and a second band comprising at least one component carrier of the at least one secondary cell, are a same band, and
whether use of the single receiver chain is estimated to negatively impact reception performance of the apparatus,
wherein the apparatus is capable of receiving at least two non-adjacent component carriers using a single receiver chain.

2. The apparatus of claim 1, wherein the at least two non-adjacent component carriers comprise at least one of:
at least two non-contiguous component carriers,
at least two inter-band component carriers with close proximity, or
at least two intra-band component carriers.

3. The apparatus of claim 1 or 2, wherein the reception from the at least one secondary cell is further configured based, at least partially, on at least one of:
a capability of the apparatus, or
one or more measurements associated with at least one of the serving cell or the at least one secondary cell.

4. The apparatus of any of claims 1 through 3, wherein configuring the reception from the at least one secondary cell comprises the instructions, when executed by the at least one processor, cause the apparatus to:
determine to not use the single receiver chain to receive the at least two non-adjacent component carriers based on at least one of:
the first band and the second band comprising the same band, or
an estimate that use of the single receiver chain for receiving the at least two non-adjacent component carriers would negatively impact the reception performance of the apparatus;
configure a first receiver chain for receiving the at least one component carrier of the serving cell; and configure a second receiver chain for receiving the at least one component carrier of the at least one secondary cell, wherein the at least two non-adjacent component carriers comprise the at least one component carrier of the serving cell and the at least one component carrier of the at least one secondary cell.

5. The apparatus of any of claim 1 through 3, wherein configuring the reception from the at least one secondary cell comprises the instructions, when executed by the at least one processor, cause the apparatus to:
determine to use the single receiver chain to receive the at least two non-adjacent component carriers based on at least one of:
the first band and the second band comprising at least partially different bands, or
an estimate that use of the single receiver chain for receiving the at least two non-adjacent component carriers would not negatively impact the reception performance of the apparatus; and
configure the single receiver chain for receiving the at least one component carrier from the serving cell, and
the at least one component carrier of the at least one secondary cell, wherein the at least two non-adjacent component carriers comprise the at least one component carrier of the serving cell and the at least one component carrier of the at least one secondary cell.

6. The apparatus of any of claims 1 through 5, wherein the apparatus is a user equipment.

7. The apparatus of any of claims 1 through 6, wherein the network node comprises a network node that provides the serving cell for the apparatus in the carrier aggregation.

8. The apparatus of any of claims 1 through 7, wherein the configuration for carrier aggregation is received via at least one of:
radio resource control signaling,
medium access control signaling, or
downlink control information signaling.

9. A method comprising:
receiving, with a user equipment from a network node, a configuration for carrier aggregation, wherein the configuration comprises, at least, an indication of at least one secondary cell; and
configuring reception from the at least one secondary cell based, at least partially, on:
whether a first band comprising at least one component carrier of a serving cell, and a second band comprising at least one component carrier of the at least one secondary cell, are a same band, and
whether use of the single receiver chain is estimated to negatively impact reception performance of the user equipment,
wherein the user equipment is capable of receiving at least two non-adjacent component carriers using a single receiver chain.

10. The method of claim 9, wherein the at least two non-adjacent component carriers comprise at least one of:
at least two non-contiguous component carriers,
at least two inter-band component carriers with close proximity, or
at least two intra-band component carriers.

11. The apparatus of claim 9 or 10, wherein the reception from the at least one secondary cell is further configured based, at least partially, on at least one of:
a capability of the user equipment, or
one or more measurements associated with at least one of the serving cell or the at least one secondary cell.

12. The method of any of claims 9 through 11, wherein the configuring of the reception from the at least one secondary cell comprises:
determining to not use the single receiver chain to receive the at least two non-adjacent component carriers based on at least one of:
the first band and the second band comprising the same band, or
an estimate that use of the single receiver chain for receiving the at least two non-adjacent component carriers would negatively impact the reception performance of the user equipment;
configuring a first receiver chain for receiving the at least one component carrier of the serving cell; and
configuring a second receiver chain for receiving the at least one component carrier of the at least one secondary cell, wherein the at least two non-adjacent component carriers comprise the at least one component carrier of the serving cell and the at least one component carrier of the at least one secondary cell.

13. The method of any of claim 9 through 11, wherein the configuring of the reception from the at least one secondary cell comprises:
determining to use the single receiver chain to receive the at least two non-adjacent component carriers based on at least one of:
the first band and the second band comprising at least partially different bands, or
an estimate that use of the single receiver chain for receiving the at least two non-adjacent component carriers would not negatively impact the reception performance of the user equipment; and
configuring the single receiver chain for receiving the at least one component carrier from the serving cell, and the at least one component carrier of the at least one secondary cell, wherein the at least two non-adjacent component carriers comprise the at least one component carrier of the serving cell and the at least one component carrier of the at least one secondary cell.

14. An apparatus comprising means for performing:
receive, from a network node, a configuration for carrier aggregation, wherein the configuration comprises, at least, an indication of at least one secondary cell; and
configure reception from the at least one secondary cell based, at least partially, on:
whether a first band comprising at least one component carrier of a serving cell, and a second band comprising at least one component carrier of the at least one secondary cell, are a same band, and
whether use of the single receiver chain is estimated to negatively impact reception performance of the apparatus,
wherein the apparatus is capable of receiving at least two non-adjacent component carriers using a single receiver chain.

15. A computer-readable medium comprising program instructions stored thereon for performing at least the following:
causing receiving, with a user equipment from a network node, of a configuration for carrier aggregation, wherein the configuration comprises, at least, an indication of at least one secondary cell; and configuring reception from the at least one secondary cell based, at least partially, on:
whether a first band comprising at least one component carrier of a serving cell, and a second band comprising at least one component carrier of the at least one secondary cell, are a same band, and
whether use of the single receiver chain is estimated to negatively impact reception performance of the user equipment,
wherein the user equipment is capable of receiving at least two non-adjacent component carriers using a single receiver chain.
